# EUROPEAN PATENT APPLICATION

(11) **EP 2 955 703 A1**
(43) Date of publication of application: **16.12.2015**
(21) Application number: 15171236.1
(22) Date of filing: 09.06.2015
(51) Int. Cl.: G07G 1/14, G07G 1/00, G07F 17/42, G07F 17/32, G06Q 10/02

(54) **SALES DATA PROCESSING APPARATUS AND METHOD FOR DISPLAYING INFORMATION BY THE SAME**

(30) Priority: 10.06.2014 JP 2014119742
(71) Applicant: Toshiba TEC Kabushiki Kaisha, Tokyo 141-0032 (JP)
(72) Inventor: OGAWA, Yuichi, Shinagawa-ku, Tokyo 141-0032 (JP)
(74) Representative: Takeuchi, Maya

(57) **Abstract**

According to one embodiment, there is provided a sales data processing apparatus including a display device, an information receiving section, a first display control section, a second display control section, a sales registering section, and a ticket-issue control section. The display device displays information. The information receiving section receives an input of ticket information concerning a ticket to be sold with a hand-over to a customer. The first display control section displays the ticket information on the display device. The second display control section displays a warning message concerning hand-over of the ticket on the display device, replacing the display of the ticket information. The sales registering section generates sales data of the ticket, using the ticket information to register the sales data. The ticket-issue control section controls an issue of the ticket on the basis of the ticket information.

## Description

### FIELD

Embodiments described herein relate generally to a sales data processing apparatus and a method for displaying information by the sales data processing apparatus.

### BACKGROUND

A store such as a convenience store provides a service for printing and issuing tickets such as tickets reserved through the Internet and lottery tickets, using a ticket-issue machine and a POS (Point Of Sales) terminal to sell the tickets.

For example, a customer reserves a ticket in a reservation site on the Internet, prints a reservation slip on which a reservation code is indicated with a code symbol such as a barcode or a two-dimensional code, and brings the reservation slip to a store.

In the store, an operator (store clerk) of the POS terminal reads the reservation code printed on the reservation slip with a scanner to display the reservation contents on a screen of the POS terminal.

If the customer confirms the reservation contents, the operator performs sales registration of the ticket and prints the ticket with the ticket-issue machine to issue it.

Incidentally, in such ticket issue processing (ticket issue job), jobs such as settlement of the ticket purchased, hand-over of a receipt, and hand-over of the ticket are necessarily performed.

The operator has to ask the customer to confirm reservation contents of the ticket or contents of a lottery ticket on the display.

In this way, the jobs at the time of the ticket issue are troublesome and thus there is a possibility that the operator (store clerk) does not hand over the issued ticket to a customer but hands over only the receipt to the customer.

### DESCRIPTION OF THE DRAWINGS

FIG. 1 is a schematic diagram illustrating a ticket sales system according to an embodiment;
FIG. 2 is a block diagram illustrating the hardware constitution of a head office server;
FIG. 3 is a block diagram illustrating the functional constitution of a POS terminal;
FIG. 4 is a flowchart illustrating an example of ticket issue processing executed by the POS terminal;
FIG. 5 is a diagram illustrating a content confirmation screen displayed on a display for operator;
FIG. 6 is a diagram illustrating a content confirmation screen displayed on a display for customer;
FIG. 7 is a diagram illustrating a warning screen displayed on the display for operator;
FIG. 8 is a diagram illustrating a warning screen displayed on the display for operator; and
FIG. 9 is a diagram illustrating a warning screen displayed on the display for customer.

### DETAILED DESCRIPTION

According to one embodiment, there is provided a sales data processing apparatus including a display device, an information receiving section, a first display control section, a second display control section, a sales registering section, and a ticket-issue control section. The display device displays information. The information receiving section receives an input of ticket information concerning a ticket to be sold with a hand-over to a customer. The first display control section displays the ticket information on the display device. The second display control section displays a warning message concerning hand-over of the ticket on the display device, replacing the display of the ticket information. The sales registering section generates sales data of the ticket, using the ticket information to register the sales data. The ticket-issue control section controls an issue of the ticket on the basis of the ticket information.

Preferably, the sales data processing apparatus further comprises an operation receiving module configured to receive a confirmation operation by a customer on the ticket information. In this case, the second display control module may display the warning message on the display device, replacing the display of the ticket information if the operation receiving module receives the confirmation operation.

Preferably, the second display control module displays on the display device, an image indicating an operation-state in which the ticket is issued, as the warning message.

Preferably, the apparatus further comprises a reproduction control module configured to reproduce a warning sound with the display of the warning message.

Preferably, the first display control module displays the ticket information on the display device for a predetermined time.

Preferably, the second display control module displays the warning message on the display device, replacing the display of the ticket information after elapse of the predetermined time.

The invention further relates to a method for displaying information on a display device, including: receiving an input of ticket information concerning a ticket to be sold with hand-over to a customer; displaying the ticket information on the display device; displaying a warning message concerning hand-over of the ticket on the display device, replacing the display of the ticket information; generating sales data using the ticket information to register the sales data; and controlling an issue of the ticket on the basis of the ticket information.

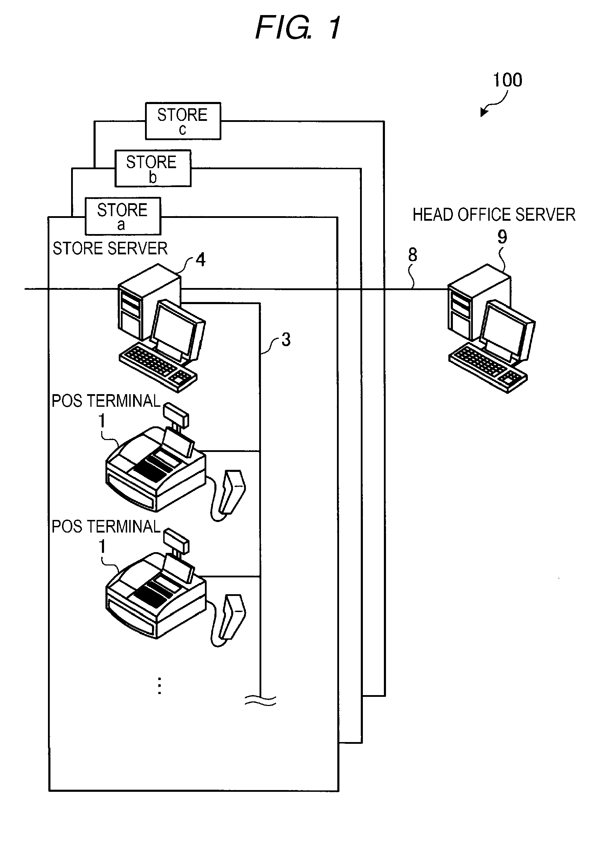

FIG. 1 is a schematic diagram illustrating a ticket sales system 100 according to a present embodiment.

A store server 4 is provided in a store (e.g., stores "a" to "c"). A plurality of POS terminals are also installed in the store. The POS terminal 1 acting as a sales data processing apparatus registers sales data in the store. The POS terminal 1 inquires a ticket which is booked by a customer in a reservation site on the Internet to a head office server 9, using a reservation code, and prints the ticket on a ticket paper to issue the ticket. The head office server 9 collectively manages sales and stocks in a plurality of stores, and reception of reservation for tickets. Note that, in the embodiment shown in FIG. 1, a plurality of POS terminals 1 are connected to the store server 4. However, the number of the POS terminals 1 used in the store is not particularly limited. Note that, in the following description, same numerals are applied to similar components in the drawings and thus descriptions thereof are not repeated.

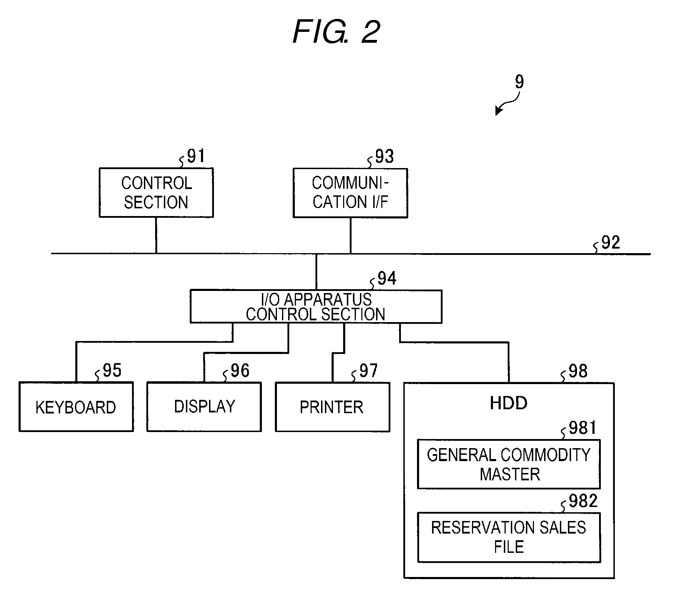

The head office server 9 is described. FIG. 2 is a block diagram illustrating the hardware configuration of the head office server 9. The head office server 9 includes a control section 91 having a computer including a CPU, a ROM, and a RAM. A keyboard 95, a display 96, a printer 97, and an HDD (Hard Disk Drive) 98 are connected to the control section 91 via a bus line 92 and an I/O device control section 94.

The control section 91 performs data communication with the store server 4 via a communication I/F (Interface) 93 and a dedicated line 8 (refer to FIG. 1). In the HDD 98, various control programs for enabling the CPU of the control section 91 to operate, a general commodity master file 981, a reservation sales file 982, and the like are stored.

The general commodity master file 981 stores commodity information concerning general commodities, which are not online reserved tickets and reserved commodities. In the general commodity master file 981, commodity information including commodity name, commodity price, and commodity image of the general commodity is stored in association with commodity code. The head office server 9 transmits the latest general commodity master file 981 to the POS terminals 1 via the store server 4 at every predetermined time (e.g., once a day), or at the time of updating data.

The reservation sales file 982 is a storage region for storing a detailed reservation information indicating a detailed reservation content of a ticket or a commodity with an online reservation in association with a reservation code. The head office server 9 stores information concerning reservation by a customer in a reservation site which is publicly provided on the Internet.

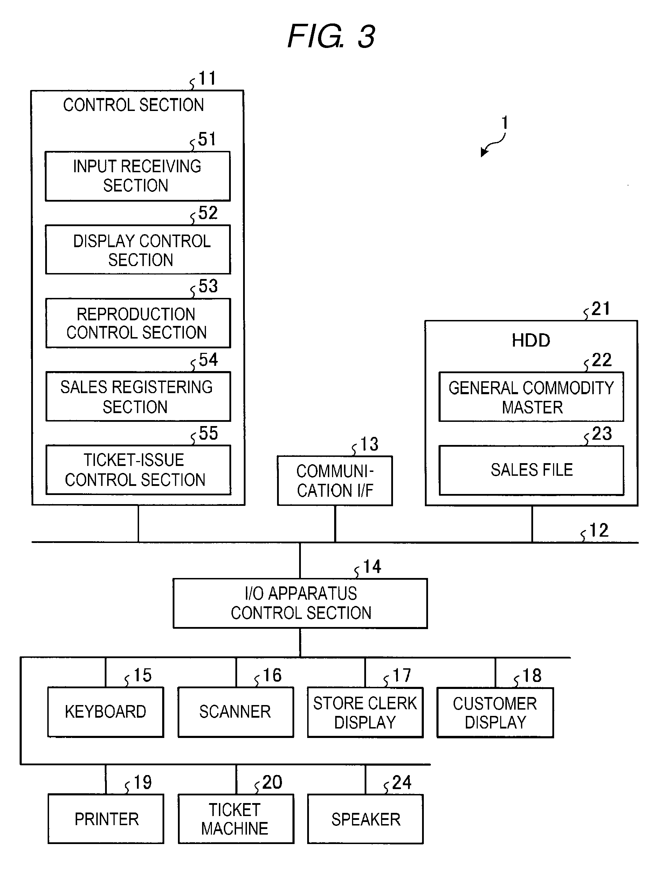

The POS terminal 1 is described. FIG. 3 is a block diagram illustrating the functional configuration of the POS terminal 1. The POS terminal 1 includes a control section 11 having a computer including a CPU, a ROM, and a RAM. A keyboard 15, a scanner 16, a display for operator 17, a display for customer 18, a printer 19, a ticket-issue machine 20, a speaker 24, and an HDD 21 are connected to the control section 11 via a bus line 12 and an I/O device control section 14. Both of the display for operator 17 and the display for customer 18 are display devices on which touch panel is arranged.

The printer 19 prints a receipt or a journal on a sheet and cuts the sheet after printing to issue them through an issue port (not shown in the figure). The ticket-issue machine 20 prints a ticket or a lottery ticket on a predetermined ticket sheet to issue the ticket or the lottery ticket through a ticket issue port (not shown in the figure). Note that, FIG. 3 illustrates the POS terminal 1 including two printers (printer 19 and ticket-issue machine 20). However, the present embodiment is not limited to this configuration. The POS terminal 1 may include only one printer to perform all kinds of print processing. The ticket-issue machine 20 may use a printer, separate from the POS terminal 1, which is connected to the POS terminal 1 through a store network.

A category of a ticket is not particularly limited. The ticket is not limited to a reservation sales and may be any ticket issued from the ticket-issue machine 20 such as a lottery ticket, a gift ticket, and other tickets sold at a register counter.

The control section 11 performs data communication with the store server 4 via a communication I/F 13, a LAN (Local Area Network) 3 (refer to FIG. 1), or the like. The HDD 21 stores various control programs and the like for enabling the CPU of the control section 11 to operate. The HDD 21 also stores a general commodity master file 22 and a sales file 23. Data in the general commodity master file 22 is updated with master data downloaded from the head office server 9.

The sales file 23 is a storage region for storing sales data and the like sales-registered by the POS terminal 1.

Functional configurations of sections of the control section 11 are described. As shown in FIG. 3, a computer program executed by the POS terminal 1 in this embodiment realizes an input receiving section 51, a display control section 52, a reproduction control section 53, a sales registering section 54, and a ticket-issue control section 55 in a module configuration. As an actual hardware in the present embodiment, the CPU (a processor) reads out the computer program from a storage medium and executes the computer program, whereby the sections are loaded onto a main storage device to generate the input receiving section 51, the display control section 52, the reproduction control section 53, the sales registering section 54, and the ticket-issue control section 55 on the main storage device.

The computer program executed in the POS terminal 1 in this embodiment is provided in a manner in which it is stored in the ROM, the HDD 21, or the like in advance. The computer program executed in the POS terminal 1 in this embodiment may be provided in a manner in which it is recorded in a computer-readable recording medium such as a CD-ROM, a flexible disk (FD), a CD-R, or a DVD (Digital Versatile Disk) in a file of an installable format or an executable format.

Further, the computer program executed in the POS terminal 1 in this embodiment may be provided in a manner in which it is stored on a computer connected to a network such as the Internet and downloaded through the network. The computer program executed in the POS terminal 1 in this embodiment may also be provided or distributed through a network such as the Internet.

The input receiving section 51 receives various inputs according to an input operation to the keyboard 15, the scanner 16, or the like. The input receiving section 51 receives an input to a display screen according to the input operation to a touch panel of the display for operator 17 or the display for customer 18. For example, when the scanner 16 scans a code symbol on a reservation slip, the input receiving section 51 decodes the code symbol to acquire a reservation code. The input receiving section 51 also receives an input of a reservation code through the operation on the keyboard 15.

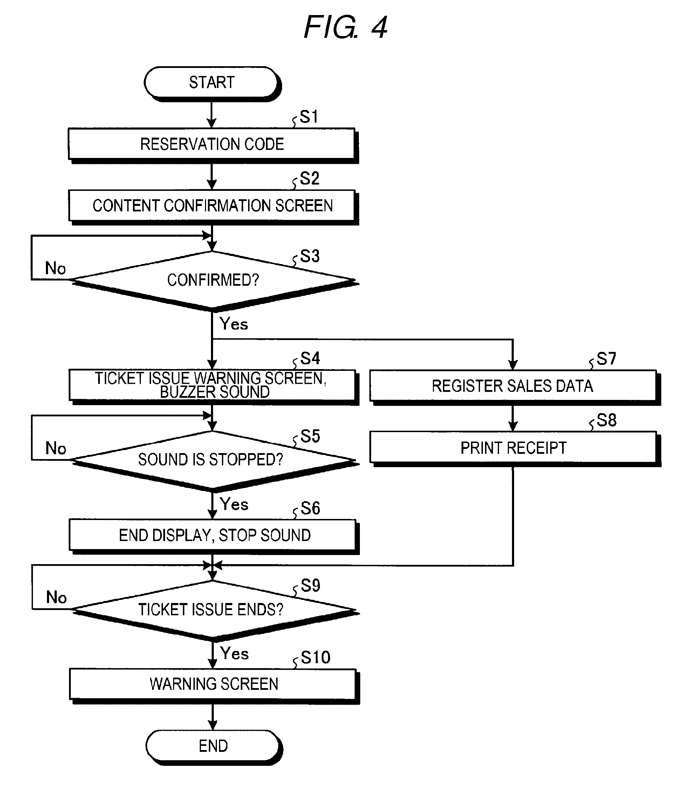

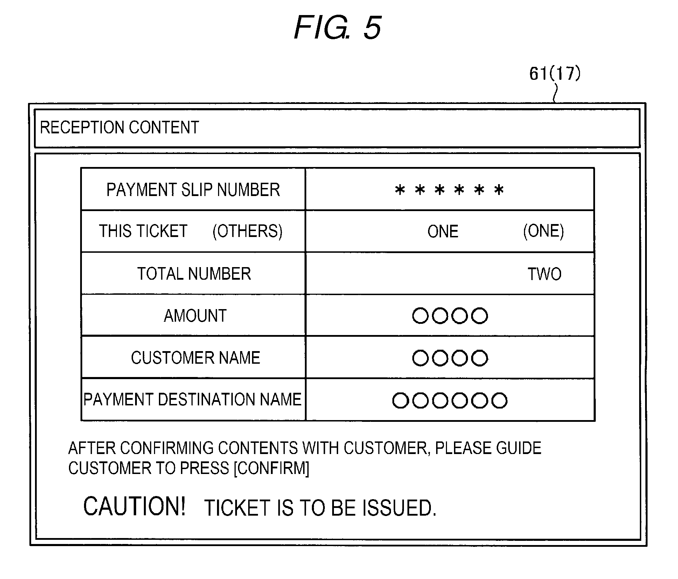

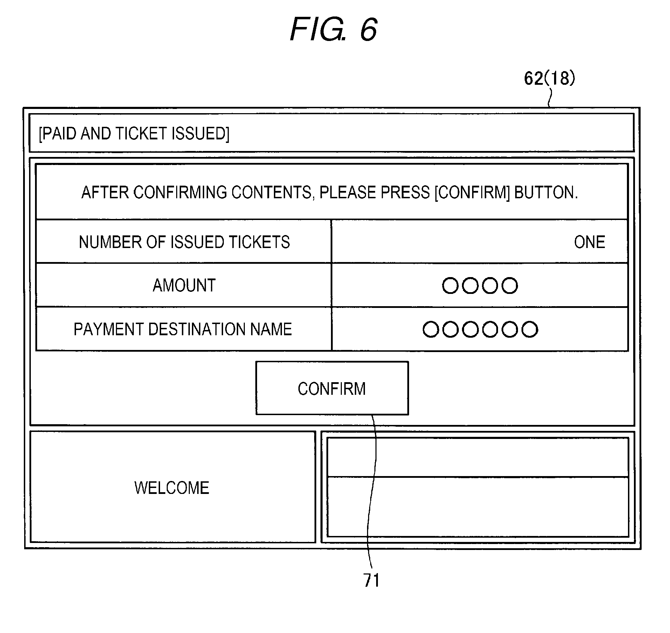

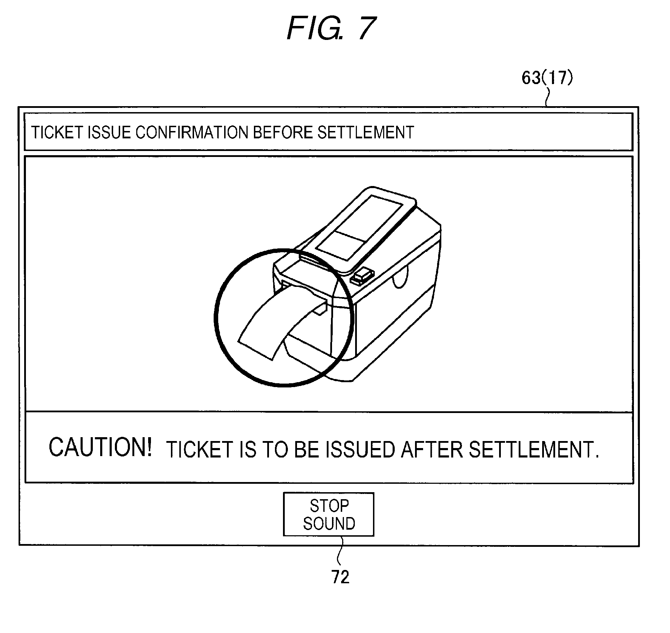

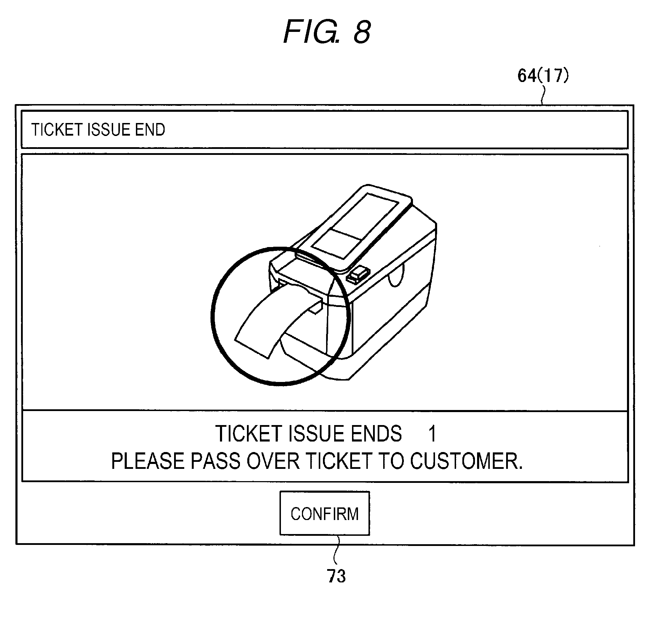

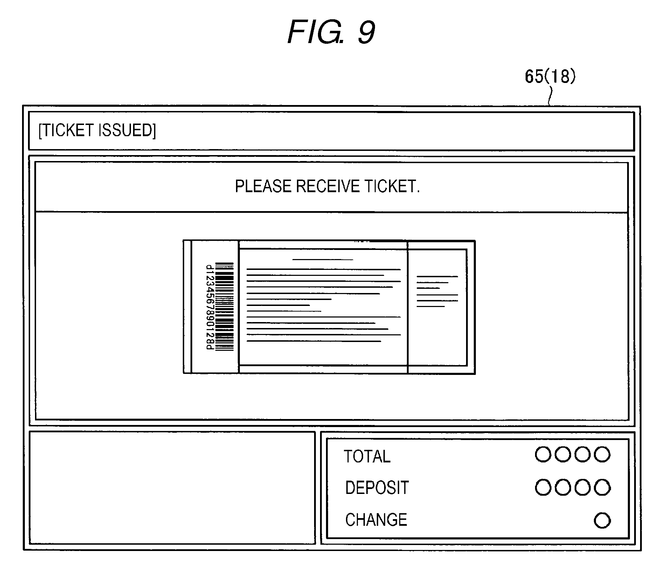

The display control section 52 controls all display operations on the display for operator 17 and the display for customer 18. For example, the display control section 52 displays a content confirmation screen 61 (refer to FIG. 5), a warning screen 63 (refer to FIG. 7), and a warning screen 64 (refer to FIG. 8) on the display for operator 17. The display control section 52 further displays a content confirmation screen 62 (refer to FIG. 6) and a warning screen 65 (refer to FIG. 9) on the display for customer 18. An example of a screen transition and an example of a screen configuration are described below with reference to a flowchart of FIG. 4.

The reproduction control section 53 controls the speaker 24 to reproduce buzzer sound or a warning message.

The sales registering section 54 performs accounting processing concerning commodities (general commodities) in the store, tickets, and the like to register sales data thereof in the sales file 23.

When a commodity code of a general commodity is input, the sales registering section 54 reads commodity information specified with the commodity code from the general commodity master file 22. The sales registering section 54 generates sales data on the basis of the read commodity information and information concerning the number of sold items or the like input from the keyboard 15 to register the sales data in the sales file 23.

The sales registering section 54 inquires ticket information to the head office server 9, using an identification code of a ticket, and acquires the ticket information. For example, a customer prints a reservation slip issued at the time the online reservation is made and brings the reservation slip to the store. The reservation slip includes a code symbol of a reservation code. When the code symbol is scanned by the scanner 16, the sales registering section 54 acquires the reservation code.

Note that an input method for the identification code is not particularly limited. For example, the POS terminal 1 may read a mark sheet or a catalog to receive the identification code according to screen operation. The POS terminal 1 may inquire other ticket information, using a part of the ticket information such as reservation date and time, a name of a person who made the reservation, and a ticket name input by the screen operation, instead of the identification code.

An inquiry destination of the ticket information is not particularly limited. Other information processing apparatus such as the store server 4 or the POS terminal 1 stores the ticket information and may transmit the ticket information in response to the inquiry of the sales registering section 54.

The display control section 52 displays the ticket information received by the sales registering section 54 on the content confirmation screen 61 for operator (refer to FIG. 5) and the content confirmation screen 62 for customer (refer to FIG. 6). Examples of a screen configuration and a specific display of the ticket information are described below with reference to FIGS. 5 and 6.

The ticket-issue control section 55 generates printing data on the basis of the ticket information and outputs the printing data to the ticket-issue machine 20. The ticket-issue machine 20 prints the printing data on a ticket sheet to issue a ticket from the ticket issue port (not shown in the figure).

An example of procedure of ticket issue processing executed by the POS terminal 1 is described with reference to FIG. 4. FIG. 4 is a flowchart illustrating the example of the ticket issue processing executed by the POS terminal 1. In the following explanation, a case in which a ticket sold with reservation is issued is described. In the example described below, detailed reservation information is used as the ticket information.

First, the input receiving section 51 receives an input of a reservation code of a ticket through the input operation from the keyboard 15, the scanner 16, or the like (Act 1). Subsequently, the sales registering section 54 inquires ticket information (detailed reservation information of a ticket) to the head office server 9, using the reservation code. The head office server 9 reads out the detailed reservation information specified with the reservation code from the reservation sales file 982 (refer to FIG. 2) and transmits the detailed reservation information to the POS terminal 1 in response to the inquiry. The display control section 52 generates, on the basis of the detailed reservation information received from the head office server 9, display data of the content confirmation screen 61 (refer to FIG. 5) indicating reservation contents of the ticket for a customer and outputs the display data to the display for operator 17 (Act 2). The display control section 52 also generates display data of the content confirmation screen 62 (refer to FIG. 6) for showing the reservation contents of the ticket for a customer on the basis of the detailed reservation information and outputs the display data to the display for customer 18 (Act 2).

FIG. 5 is a diagram illustrating the content confirmation screen 61 displayed on the display for operator 17. On the content confirmation screen 61, the detailed reservation information such as information indicating a payment slip number, a price of the thicket, a customer name, and a payment destination of the ticket downloaded from the reservation sales file 982 of the head office server 9 is displayed. On the content confirmation screen 61, for example, a total of the number of printed sheets including the number of tickets and the number of issued receipts is displayed. On the content confirmation screen 61 for operator, a precautionary statement for asking a customer to confirm the detailed reservation information and thereafter operate a confirmation button 71 (refer to FIG. 6) on the content confirmation screen 62 for customer is displayed. A message for informing that a ticket is issued is also displayed on the content confirmation screen 61 in a highlighting manner, which easily attracts operator's attention, such as slightly larger characters or a red color.

FIG. 6 is a diagram illustrating the content confirmation screen 62 displayed on the display for customer 18. On the content confirmation screen 62, for example, information indicating the number of tickets, a price of the ticket, and a payment destination of the ticket is displayed. On the content confirmation screen 62, the confirmation button 71 for obtaining approval of the customer concerning the information displayed on the content confirmation screen 62 is also provided.

In this way, the display control section 52 displays the ticket information on the content confirmation screen 61 (refer to FIG. 5) and the content confirmation screen 62 (refer to FIG. 6) as described above. Note that the display control section 52 may display not all the ticket information but a part of the ticket information selectively so that the customer and operator easily confirm the ticket information on the content confirmation screens, respectively.

In the examples shown in FIGS. 5 and 6, the display control section 52 displays, concerning the ticket sold with the reservation, information such as a reservation code, a name of a person who made reservation, reservation date and time, a sales company, a payment destination, and a name or title of the ticket, as the ticket information. However, display of the display control section 52 is not limited to the example shown in the figure. The display control section 52 may display ticket information other than the above such as information indicating an event reserved through the ticket, place of the event, and date and time of the event.

The ticket information to be displayed is not limited to the detailed reservation information (refer to FIGS. 5 and 6) relating to the ticket sold with the reservation. The display control section 52 displays, as the ticket information, the whole or general information concerning the ticket such as information indicating contents of the ticket and information concerning payment and sales methods of the ticket on the content confirmation screens 61 and 62. For example, as to a ticket such as a lottery ticket for which reservation is unnecessary, the display control section 52 only displays, as the ticket information, information indicating a name or title, category, lottery number, and the number of units of a lottery.

Referring back to FIG. 4, if the confirmation button 71 on the display for customer 18 is operated (Yes in Act 3), the display control section 52 executes the process in Act 4. While the confirmation button 71 is not operated (No in Act 3), the display control section 52 returns to the process in Act 3 to wait for operation. The display control section 52 displays the warning screen 63 on the display for operator 17 (refer to FIG. 7), replacing the display of the content confirmation screen 61 (refer to FIG. 5). The reproduction control section 53 controls the speaker 24 to reproduce a buzzer sound (Act 4). Note that the reproduction control section 53 may reproduce a sound or voice message instead of the buzzer sound.

FIG. 7 is a diagram illustrating the warning screen 63 displayed on the display for operator 17. The display control section 52 displays, on the warning screen 63, an illustration or a moving image indicating an operation-state in which the ticket-issue machine 20 is issuing a ticket. As shown in FIG. 7, the display control section 52 may display the ticket issued from the ticket issue port in a highlighting manner such that the ticket is surrounded with a thick frame. The display control section 52 displays a message indicating that the ticket is issued after settlement (after accounting processing) on the warning screen 63.

In this way, the warning screen 63 calls for attention concerning a ticket issue in association with a settlement job. That is, in the settlement job, the POS terminal 1 calculates a charge amount to a customer to display it. An operator inputs a deposit received from the customer to the POS terminal 1, causes the POS terminal 1 to calculate change, and, if there is the change, hands over the change to the customer. In general, hand-over of the ticket is also performed at the time of the settlement. Therefore, in this embodiment, timings of the settlement and the ticket issue are displayed in association with each other so that the operator certainly pays his or her attention to the ticket after the settlement processing. According to the present embodiment, the operator can aware of the hand-over of the ticket associated with the settlement processing in the order of performing jobs.

Note that, in the example shown in FIG. 7, the message indicating that the ticket is issued after the settlement is carried out is displayed. However, timing at which the ticket is actually issued is not limited according to the message. Specifically, the ticket printing processing starts after the confirmation button 71 is operated. Therefore, depending on a printing amount and printing speed, there is a possibility that the ticket issue processing is completed during the settlement processing. However, taking the intention of the display described above in which the operator can keep his or her attention to the ticket after the settlement into account, the message shown in FIG. 7 may be displayed.

The reproduction control section 53 reproduces the buzzer sound together with the display on the warning screen 63 and therefore a sound stop button 72 for stopping the buzzer sound is provided on the warning screen 63.

If the sound stop button 72 is operated (Yes in Act 5), the reproduction control section 53 stops the buzzer sound and the display control section 52 terminates the display of the warning screen 63 (Act 6). While the sound stop button 72 is not operated (No in Act 5), the output of the buzzer sound is continued and the display of the warning screen 63 is also maintained.

In general, if the content confirmation screen 62 is displayed on the display for customer 18, the operator has to urge the customer to confirm detail information displayed on the display for customer 18 and operate the confirmation button 71 based on the result of the confirmation. On the other hand, the display control section 52 in the present embodiment performs the warning display for calling his or her attention to the issue of the ticket at the timing at which the confirmation button 71 on the display for customer 18 is operated. Therefore, it is possible to make the operator aware of the presence of the ticket again at the timing at which guidance concerning the content confirmation screen 62 and guidance of operation of the confirmation button 71 are completed.

On the other hand, if the confirmation button 71 is operated (Yes in Act 3), the sales registering section 54 calculates change from a total payment amount and a deposit received from the customer to generate sales data including the accounting data and commodity data of a purchased commodity. The sales registering section 54 adds information such as a receipt number, register number, and name of a person (operator) in charge to the sales data and registers the sales data in the sales file 23 (Act 7). The control section 11 generates printing data of a receipt, using the sales data to output the printing data to the printer 19. The printer 19 prints the receipt on a sheet to issue the receipt from a receipt issue port (Act 8).

Subsequently, the display control section 52 determines whether the ticket issue processing ends (Act 9). If the ticket issue processing continues (No in Act 9), the display control section 52 waits for the end of the ticket issue processing. If the ticket issue processing ends (Yes in Act 9), the display control section 52 displays the warning screen 64 (refer to FIG. 8) for instructing the hand-over of the ticket on the display for operator 17 (Act 10). The display control section 52 displays the warning screen 65 (refer to FIG. 9) for calling attention to the receipt of the ticket on the display for customer 18 (Act 10).

FIG. 8 is a diagram illustrating the warning screen 64 displayed on the display for operator 17. The display control section 52 displays a message, such as "end of ticket issue", that the issue of the ticket is ended on the warning screen 64. The display control section 52 also displays, on the warning screen 64, a statement or notice for instructing the operator to hand over the ticket to the customer. As shown in FIG. 8, the display control section 52 may display, on the warning screen 64, an illustration or the like indicating an operation-state in which the ticket is issued by the ticket-issue machine 20. A confirmation button 73 is provided on the warning screen 64. If the confirmation button 73 is operated, the display control section 52 ends the display of the warning screen 64.

FIG. 9 is a diagram illustrating the warning screen 65 displayed on the display for customer 18. The display control section 52 displays, on the warning screen 65, a message for urging the customer to receive the ticket from the operator. The display control section 52 also displays an illustration of the ticket issued on the warning screen 65. Note that, if the confirmation button 73 is operated on the warning screen 64 (refer to FIG. 8), the display control section 52 ends the display of the warning screen 65.

The several embodiments are described above. However, the embodiments are presented as an example and are not intended to limit the scope of the invention. These new embodiments can be carried out in various other forms. Various omissions, substitutions, and changes can be performed without departing from the spirit of the invention. The embodiments and modifications thereof are included in the scope and the gist of the invention, and included in the invention described in claims and the scope of equivalents thereof.

For example, the embodiment described above may be applied to other information processing apparatuses such as a kiosk terminal and a self-checkout terminal.

In the above description, if the confirmation button 71 is operated on the content confirmation screen 62 (refer to FIG. 6), the screen display is transitioned or changed from the content confirmation screen 61 to the warning screen 63. However, timing of the screen transition is not limited to this. The display control section 52 may change the screen display from the content confirmation screen 61 to the warning screen 63 after the elapse of a predetermined time from the display of the content confirmation screen 61.

A display form in the present embodiment is not limited to the example described above. The screen transition of the content confirmation screen, the warning screen, and the like is not essential. In a part of the same screen displayed, the display of the ticket information may be changed to the display of the warning message concerning the hand-over of the ticket.

As described above, according to the present embodiment, after the display of the ticket information is extinguished, the warning message concerning the hand-over of the ticket is displayed. Consequently, it is possible to prevent occurrence of a situation in which not only the operator (store clerk) but also the customer forget the hand-over of the ticket issued while being preoccupied with the confirmation of the ticket information displayed on the screen.

## Claims

1. A sales data processing apparatus comprising:
a display device for displaying information;
an information receiving module configured to receive an input of ticket information concerning a ticket to be sold with a hand-over to a customer;
a first display control module configured to display the ticket information on the display device;
a second display control module configured to display a warning message concerning hand-over of the ticket on the display device, replacing the display of the ticket information;
a sales registering module configured to generate sales data of the ticket, using the ticket information to register the sales data; and
a ticket-issue control module configured to control an issue of the ticket on the basis of the ticket information.

2. The apparatus according to claim 1, further comprising an operation receiving module configured to receive a confirmation operation by a customer on the ticket information, wherein
the second display control module displays the warning message on the display device, replacing the display of the ticket information if the operation receiving module receives the confirmation operation.

3. The apparatus according to claim 1 or 2, wherein the second display control module displays on the display device, an image indicating an operation-state in which the ticket is issued, as the warning message.

4. The apparatus according to any one of claims 1 to 3, further comprising a reproduction control module configured to reproduce a warning sound with the display of the warning message.

5. The apparatus according to claim 1, wherein the first display control module displays the ticket information on the display device for a predetermined time, and the second display control module displays the warning message on the display device, replacing the display of the ticket information after elapse of the predetermined time.

6. A method for displaying information on a display device, including:
receiving an input of ticket information concerning a ticket to be sold with hand-over to a customer;
displaying the ticket information on the display device;
displaying a warning message concerning hand-over of the ticket on the display device, replacing the display of the ticket information;
generating sales data using the ticket information to register the sales data; and
controlling an issue of the ticket on the basis of the ticket information.
